# EUROPÄISCHE PATENTSCHRIFT

(11) **EP 3 161 362 B1**
(45) Veröffentlichungstag und Bekanntmachung des Hinweises auf die Patenterteilung: **04.12.2019**
(21) Anmeldenummer: 15731619.1
(22) Anmeldetag: 30.06.2015
(51) Int. Cl.: F16L 5/04, F16L 55/10, H02G 3/08, A62C 2/06, H02G 3/04

(54) **BRANDSCHUTZBAND**
FIRE RESISTANT TAPE
BANDE IGNIFUGE

(30) Priorität: 30.06.2014 EP 14174878
(43) Veröffentlichungstag der Anmeldung: 03.05.2017
(73) Patentinhaber: Hilti Aktiengesellschaft, 9494 Schaan (LI)
(72) Erfinder: FÖRG, Christian, 86862 Dillishausen (DE)
(86) Internationale Anmeldenummer: PCT/EP2015/064806
(87) Internationale Veröffentlichungsnummer: WO 2016/001205

(56) Entgegenhaltungen:
- EP-A1- 2 505 891
- EP-A2- 2 578 274
- WO-A1-2013/160776
- DE-A1- 4 041 470
- DE-A1- 10 003 856
- DE-U1-202012 003 405

## Beschreibung

Die Erfindung betrifft ein Brandschutzband zum Einlegen in Durchbrüche in Wänden oder Decken von Gebäuden.

Um eine Ausbreitung von Feuer oder Rauch in Gebäuden zu verhindern, sind verschiedene Systeme bekannt, die Öffnungen oder Durchbrüche in Decken oder Wänden im Brandfall schließen können. Häufig werden dazu Bauelemente mit einem intumeszierenden Material verwendet, die an oder in der Öffnung angeordnet sind. Im Brandfall schäumt das intumeszierende Material durch die ansteigende Temperatur auf und verschließt so die Öffnung, wodurch die Ausbreitung von Rauch oder Feuer durch diese Öffnung verhindert oder zumindest verzögert wird.

Das intumeszierende Material wird beispielsweise als Brandschutzband geliefert, das in Öffnungen oder Wanddurchbrüche gelegt werden kann. Dies ermöglicht eine flexible Anpassung an die Form und die Größe der Öffnung und an die Leitungen, die durch diese Öffnungen verlegt sind.

Aus optischen Gründen werden die Brandschutzbänder üblicherweise in die Öffnung oder den Durchbruch eingelegt. Dies hat aber den Nachteil, dass im Brandfall zunächst die dem Feuer zugewandte Stirnseite eines solchen Bandes oder einer Manschette mit einem solchen Brandschutzband mit einer relativ kleinen Fläche den hohen Temperaturen ausgesetzt ist. Das Material schäumt an dieser Stirnseite auf, wodurch aufgrund der isolierenden Eigenschaften des aufgeschäumten Materials eine Abschirmung des dahinterliegenden Materials gegen die ansteigenden Temperaturen erfolgt. Das dahinterliegende Material wird dadurch erst zeitverzögert aktiviert, da der Temperaturanstieg durch das bereits aufgeschäumte Material verlangsamt wird. Dieser Effekt wird beispielsweise zusätzlich dadurch verstärkt, dass das Brandschutzband zusätzlich durch die anliegenden Wände abgeschirmt oder sogar gekühlt wird, insbesondere wenn das Brandschutzband in die Wand oder die Decke eingebettet ist. Dieses Problem tritt besonders bei großvolumigen Leitungen, beispielsweise Wasserleitungen und Abwasserleitungen, auf, die durch die Durchbrüche verlegt sind. Diese sind häufig aus einem sehr dünnwandigen Material gefertigt sind, das einen Schmelzpunkt unterhalb der Aktivierungstemperatur des intumeszierenden Materials des Brandschutzbandes hat. Übliche Materialien für solche Rohre sind beispielsweise Polyethylen oder Polypropylen, die eine Schmelztemperatur von 130 °C bis 145 °C bzw. 160 °C aufweisen. Die intumeszierenden Materialien haben üblicherweise eine Aktivierungstemperatur von ca. 200 °C.

Um dieses Problem zu beheben, sind aus dem Stand der Technik, beispielsweise aus der EP 2 088 183 A1 oder der US 5,137,658 A Materialkombinationen bekannt, die zusätzlich zum intumeszierenden Material ein Treibmittel aufweisen, das eine niedrigere Aktivierungstemperatur aufweist. Diese Materialkombinationen haben gewissermaßen eine zweistufige Intumeszenz, wodurch bereits bei einer geringen Temperatur eine Volumenvergrößerung erfolgt. Das Problem, dass eine bereits aufgeschäumte Oberfläche die darunterliegenden Schichten abschirmt, besteht aber auch bei diesen Materialkombinationen.

Eine weitere Lösungsmöglichkeit ist aus der DE 20 2012 003 405 A1 bekannt. Gemäß dieser Schrift weist das intumeszierende Material Kanäle auf, die sich von der Oberfläche in das Material erstrecken. Diese Kanäle sollen durch die vergrößerte Oberfläche eine schnellere Erwärmung des Brandschutzbandes ermöglichen. Sobald das Material aber anfängt aufzuschäumen, werden diese Kanäle geschlossen, sodass deren Wirkung reduziert ist.

Ein weiteres mehrlagiges Brandschutzband ist aus der DE 40 41 470 A1 bekannt. Diese Schrift offenbart intumeszenzfähige Flächengebilde, die eine Schicht körniges Intumeszenzmaterial zwischen zwei textilen Flächengebilden enthalten, die miteinander vernadelt oder vernäht sind.

Aufgabe der Erfindung ist es, ein Brandschutzband bereitzustellen, das eine schnellere Expansion bereitstellt und einen großen Querschnitt schnell und zuverlässig verschließen kann.

Zur Lösung der Aufgabe ist ein Brandschutzband nach dem unabhängigen Anspruch 1 bzw. 2 zum Einlegen in Durchbrüche in Wänden oder Decken von Gebäuden vorgesehen, mit zumindest zwei Lagen aus einem intumeszierenden Material, wobei die Lagen jeweils an einer Außenseite einen ersten Längsrand und an einer entgegengesetzten Außenseite einen zweiten Längsrand haben, wobei die Lagen flexibel miteinander verbunden sind.

Die Hitze wirkt üblicherweise zunächst an einer Stirnseite, die dem Brand zugewandt ist, auf das Brandschutzband ein, also auf die ersten oder die zweiten Längsränder. Wird das Material der Lagen an diesen Längsrändern aktiviert, schäumt dieses auf und drückt die beiden Lagen an diesen Längsränder auseinander, sodass die innen liegende der beiden Lagen in den Durchbruch bzw. in den Hohlraum, der durch das schmelzende Rohr bzw. die schmelzende Leitung entsteht, hineingedrückt wird. Erfindungsgemäß können im Brandfall also zunächst die zwei Lagen, die zueinander beweglich sind, auseinander gedrückt werden, sodass diese eine größere Oberfläche aufweisen, die für eine direkte Einwirkung der Hitze zur Verfügung steht.

Da die innere Lage in den Durchbruch geklappt wird, ist bereits durch die nicht aufgeschäumte Lage eine Verengung des Durchbruchs geschaffen. Schäumen beide Lagen anschließend vollständig auf, was durch die größere Oberfläche schneller erfolgt, behindern sich diese nicht gegenseitig, da die Lagen weiter voneinander entfernt sind. Zudem kann so ein wesentlich größeres Volumen durch das aufgeschäumte Material ausgefüllt werden.

Die Lagen sind zum Beispiel separate Lagen.

Die Lagen sind beispielsweise, insbesondere durch das flexible Verbindungsmittel, derart miteinander verbunden, dass diese durch ein Aktivieren des intumeszierenden Materials am jeweils freien, also dem Verbindungsmittel gegenüberliegenden Längsrand durch das intumeszierende Material auseinandergedrückt werden und anschließend auseinanderklaffen. Somit wird bereits der Querschnitt, durch den Rauch oder Feuer durchdringen können, durch die in den Hohlraum stehende Lage des Brandschutzbandes verkleinert, bevor das Material vollständig aufgeschäumt ist. Durch die in den Durchbruch ragende Lage kann das Brandschutzband anschließend durch Aufschäumen ein wesentlich größeres Volumen ausfüllen bzw. einen wesentlich größeren Querschnitt verschließen als Brandschutzband mit einer einzigen Lage gleicher Dicke, die flach am Rand der Öffnung anliegt.

Um die Lagen flexibel miteinander zu verbinden, ist vorzugsweise ein flexibles Verbindungsmittel vorgesehen, wobei das Verbindungsmittel insbesondere jeweils nur an den ersten Längsrändern oder nur an den zweiten Längsrändern der Lagen mit diesen verbunden ist. Dieses Verbindungsmittel stellt während der Montage und in nicht aktiviertem Zustand sicher, dass die beiden Lagen sich nicht gegeneinander verschieben. Zudem kann das flexible Verbindungsmittel eine Art Gelenk bilden, um das die Lagen gegeneinander verschwenkt bzw. bewegt werden können.

Das Verbindungsmittel weist beispielsweise ein Gewebe, insbesondere ein Glasfasergewebe, auf, das eine entsprechend hohe Temperaturbeständigkeit aufweist, um auch im Brandfall eine zuverlässige Verbindung der Lagen sicherzustellen.

Das Verbindungsmittel kann zwischen den Lagen zusätzlich einen flexiblen Expansionsbereich aufweisen, durch den die Lagen auch an dem Längsrand, an dem diese durch das Verbindungsmittel miteinander verbunden sind, um einen gewissen Betrag auseinandergedrückt werden können.

Der Expansionsbereich ist vorzugsweise zumindest einmal, insbesondere mehrfach, gefaltet, sodass dieser platzsparend zwischen den Lagen angeordnet werden kann. Somit stört der Verbindungsbereich nicht während der Montage des Brandschutzbandes, da dieser geschützt zwischen den beiden Lagen angeordnet ist. Die Lagen können auf verschiedene Weise mit dem Verbindungsmittel verbunden sein. Beispielsweise sind die Lagen flächig mit dem Verbindungsmittel verbunden, insbesondere auf dieses aufgeklebt. Dies ermöglicht eine einfache Herstellung, da die Lagen und das Verbindungsmittel getrennt voneinander hergestellt und anschließend miteinander verbunden werden können.

Das Verbindungsmittel kann an den voneinander abgewandten Flächen der beiden Lagen mit diesen verbunden sein. In dieser Ausführungsform umschließt das Verbindungsmittel gewissermaßen das Brandschutzband bzw. die beiden Lagen, sodass diese geschützt zwischen dem Verbindungsmittel angeordnet sind.

Alternativ ist es aber auch denkbar, dass sich das Verbindungsmittel zumindest teilweise in die Lagen erstreckt, insbesondere in diese eingegossen ist.

Um die Verlegung eines solchen Brandschutzbandes zu erleichtern, ist erfindungsgemäß zwischen den beiden Lagen eine Verbindung vorgesehen, die die Lagen form- und/oder stoffschlüssig miteinander verbindet. Diese Verbindung kann bei einer Temperatur unterhalb der Intumeszenztemperatur der beiden Lagen, insbesondere unterhalb von 60 °C, gelöst werden. Durch diese Verbindung werden die beiden Lagen gegeneinander fixiert, sodass diese gewissermaßen als ein mehrlagiges Band verlegt werden können. Um die gegenseitige Bewegung der Lagen im Brandfall bzw. bei einer Aktivierung des intumeszierenden Materials nicht zu behindern, ist die Temperatur, bei der die Verbindung gelöst werden kann, so gewählt, dass diese weit unterhalb der Intumeszenztemperatur der Lagen ihre Festigkeit verliert, sodass bei Erreichen der Intumeszenztemperatur eine ungehinderte Ausbreitung bzw. eine Bewegung der beiden Lagen möglich ist.

Die Verbindung kann durch einen Faden, eine Klammer oder eine Verbindungsschicht gebildet sein, wobei der Faden bzw. die Klammer aus einem Kunststoff bestehen, der sich bei einer Temperatur unterhalb der Intumeszenztemperatur der Lagen zersetzt, schmilzt oder soweit erweicht, dass bei Erreichen der Intumeszenztemperatur eine ungehinderte Ausbreitung bzw. eine Bewegung der beiden Lagen möglich ist, z.B. Polyester. Die Verbindungsschicht kann beispielsweise durch ein beidseitig klebendes Klebeband gebildet sein, das eine einfache Verbindung der Lagen mit der Verbindungsschicht ermöglicht.

Um eine bessere Wärmeeinleitung in die Lagen zu erzielen, kann zumindest eine Lage von einem Längsrand weg verlaufende Rippen und/oder Kanäle aufweisen, durch die die ansteigende Temperatur weiter in die Lagen hinein wirken kann.

Weitere Vorteile und Merkmale ergeben sich aus der nachfolgenden Beschreibung in Verbindung mit den beigefügten Zeichnungen. In diesen zeigen:
- **Figur 1**: einen Durchbruch in einer Decke mit einem erfindungsgemäßen Brandschutzband,
- **Figur 2**: den Durchbruch aus Figur 1 mit aktiviertem Brandschutzband,
- **Figur 3**: eine zweite Ausführungsform eines erfindungsgemäßen Brandschutzbandes, und
- **Figur 4**: eine dritte Ausführungsform eines erfindungsgemäßen Brandschutzbandes.

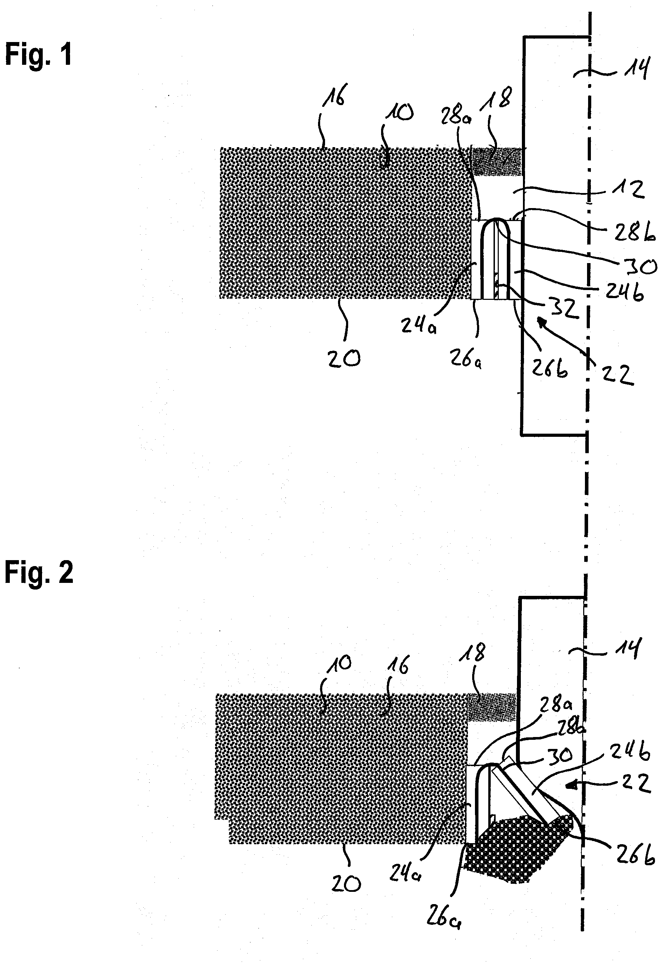

In Figur 1 ist eine Decke 10, beispielsweise aus Beton gezeigt, mit einem Durchbruch 12, durch den eine Leitung 14 verlegt ist. Die Leitung 14 ist beispielsweise ein Wasser- oder Abwasserrohr, das aus Kunststoff, beispielsweise Polyethylen oder Polypropylen, besteht.

Im ringförmigen Schlitz zwischen Leitung 14 und Deckenrand ist an der Oberseite 16 der Decke 10 ein Abdeckelement 18 vorgesehen. An der Unterseite 20 der Decke 10 ist im Schlitz ein Brandschutzband 22 angeordnet, das im Brandfall den Durchbruch 12 verschließen und so den Durchtritt von Rauch oder Feuer verhindern oder zumindest verzögern kann.

Das Brandschutzband 22 wird als Endlosmaterial, beispielsweise auf einer Rolle, angeliefert und umlaufend um die Leitung 14 bzw. in den Durchbruch 12 gelegt.

Wie in Figur 1 zu sehen ist, hat das Brandschutzband 22 zwei in Längsrichtung durchgehende Lagen 24a, 24b aus einem intumeszierenden Material, das unter Hitzeeinwirkung aufschäumt und so sein Volumen vergrößert, wodurch der Durchbruch 12 verschlossen und der Durchtritt von Feuer oder Rauch verhindert werden kann. Die Lagen 24a, 24b haben jeweils einen der Unterseite 20 zugewandten ersten Längsrand 26a, 26b sowie einen entgegengesetzten zweiten Längsrand 28a, 28b.

Wie in Figur 1 zu sehen ist, sind die Lagen 24a, 24b durch ein flexibles Verbindungsmittel 30, in dieser Ausführungsform ein Gewebeband mit Glasfasergewebe, an den zweiten Längsrändern 26a, 26b flexibel miteinander verbunden. Das Verbindungsmittel 30 erstreckt sich in die Lagen 24a, 24b, sodass die Lagen 24a, 24b formschlüssig mit dem Verbindungsmittel 30 verbunden sind, wobei sich das Verbindungsmittel 30 von den zweiten Längsrändern 28a, 28b bis zu den ersten Längsrändern 26a, 26b erstreckt. Durch dieses flexible Verbindungsmittel können die Lagen 24a, 24b um ihre zweiten Längsränder 28a, 28b gegeneinander verschwenkt werden.

Des Weiteren ist eine Verbindungsschicht 32 vorgesehen, die in dieser Ausführungsform den ersten Längsrändern 26a, 26b zugeordnet ist und die beiden Lagen 24a, 24b gegeneinander fixiert. Diese Verbindungsschicht 32 hat eine Schmelztemperatur deutlich unterhalb der Intumeszenztemperatur der Lagen 24a, 24b, die üblicherweise im Bereich von ca. 200 °C liegt. Vorzugsweise liegt die Schmelztemperatur der Verbindungsschicht bei ca. 60 °C.

Die Herstellung des Brandschutzbandes 22 erfolgt beispielsweise, indem eine Lage aus einem fließfähigen oder streichfähigen intuszierenden Material in eine Form gegossen wird. Anschließend wird das Verbindungsmittel 30 auf das Material aufgelegt. Abhängig davon, wie flüssig das Material ist, kann das Verbindungsmittel 30 in dieses einsinken oder auf dessen Oberfläche liegen bleiben und sich stoffschlüssig mit dieser verbinden. Sinkt das Verbindungsmittel 30 nicht in das Material ein, kann weiteres Material in die Form eingebracht werden, sodass das Verbindungsmittel 30 von diesem umschlossen ist.

Anschließend wird die Verbindungsschicht 32 auf die Oberfläche aufgebracht, beispielsweise aufgelegt. Dies kann in noch feuchtem Zustand des Materials erfolgen, sodass sich die Verbindungsschicht 32 stoffschlüssig mit dem Material verbindet.

In einem letzten Herstellungsschritt wird das Material mit dem Verbindungsmittel 30 in noch nicht ausgehärtetem Zustand des Material so zusammengelegt, dass sich die Zwischenlage zwischen zwei Abschnitten des Material befindet, die jeweils die erste und die zweite Lage 24a, 24b definieren.

Im Brandfall wird durch die ersten Längsränder 26a, 26b des Brandschutzbandes 22 gebildete Stirnseite dem Feuer ausgesetzt und erhitzt. Zeitgleich mit diesen wird auch die Verbindungsschicht 32 erhitzt.

Da die Schmelztemperatur der Verbindungsschicht weit unterhalb der Intumeszenztemperatur der beiden Lagen 24a, 24b liegt, schmilzt diese bereits, bevor die Lagen 24a, 24b aufschäumen. Somit sind die Lagen 24a, 24b vor einem Aufschäumvorgang nicht mehr miteinander verbunden und können sich um die zweiten Längsränder 28a, 28b flexibel gegeneinander bewegen.

Wie in Figur 2 zu sehen ist, beginnt das Material an den ersten Längsrändern 26a, 26b aufzuschäumen, wodurch die Lagen 24a, 24b an den ersten Längsrändern 26a, 26b auseinandergedrückt werden. Die zweite Lage 24b wird mit dem ersten Längsrand 26a durch das Aufschäumen des Materials an diesen Längsränder 26a, 26b vom Rand des Durchbruchs 12 weg bzw. in Richtung der Leitung 14 gedrückt. Aufgrund der geringen Schmelztemperatur der Leitung 14 ist diese bereits geschmolzen bzw. deutlich eingeschnürt. Die zweite Lage 24b wird in den dadurch entstandenen Hohlraum bewegt.

Wie in Figur 2 zu sehen ist, wird bereits, bevor das Material der Lagen 24a, 24b vollständig aufgeschäumt ist, ein Großteil des Querschnitts des Durchbruchs 12 durch das Auseinanderklaffen der Lagen 24a, 24b, insbesondere durch die in den Durchbruch 12 ragende zweite Lage 24b verschlossen. Da anschließend eine wesentlich größere Oberfläche an den einzelnen Lagen 24a, 24b vorhanden ist, die dem Feuer ausgesetzt ist, erfolgt eine schnellere Wärmeeinleitung und somit ein schnelleres Aufschäumen der Lagen 24a, 24b, sodass der Durchbruch 12 schneller geschlossen werden kann. Zudem kann mit dem erfindungsgemäß mehrlagigen Brandschutzband 22, da die Lagen 24a, 24b vor dem Aufschäumen auseinander bewegt werden und sich somit beim Aufschäumen nicht gegenseitig behindern, ein wesentlich größeres Volumen gefüllt und somit ein größerer Querschnitt verschlossen werden, als dies mit einem einlagigen Brandschutzband mit gleicher Dicke der Fall ist. Die Lagen 24a, 24b können beliebig miteinander verbunden sein, solange diese beim Aufschäumen des Materials der Lagen 24a, 24b an den ersten Längsrändern 26a, 26b bzw. den zweiten Längsrändern 28a, 28b gegeneinander bewegt werden können.

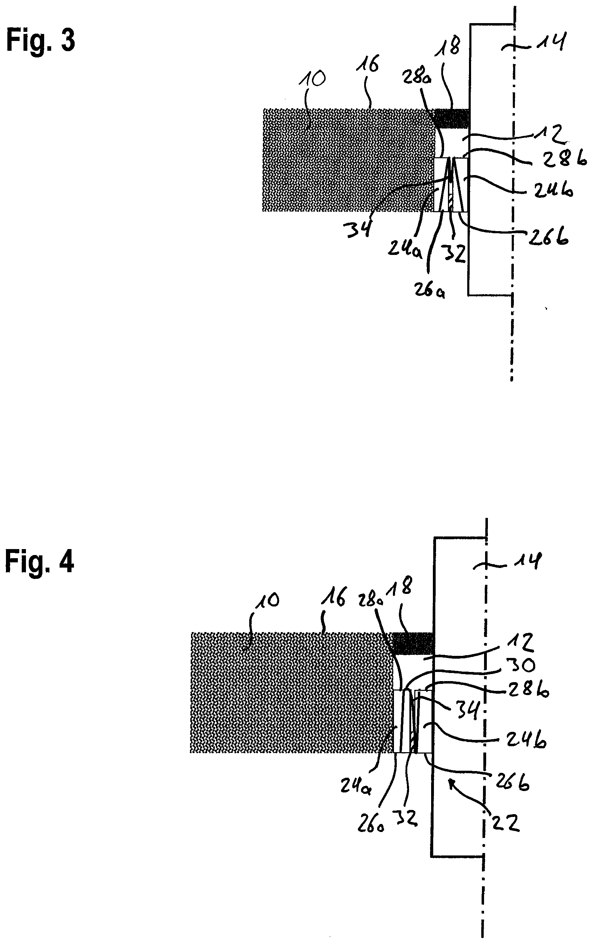

Eine zweite Ausführungsform ist beispielsweise in Figur 3 gezeigt. Diese Ausführungsform entspricht im Wesentlichen der in den Figuren 1 und 2 gezeigten Ausführungsform. Das Verbindungsmittel 30 erstreckt sich aber nicht in die Lagen 24a, 24b, sondern ist auf den einander zugewandten Flächen der Lagen 24a, 24b flächig mit diesen verbunden, insbesondere auf diese aufgeklebt.

Des Weiteren ist zwischen den Lagen 24a, 24b ein Expansionsbereich 34 vorgesehen, der durch einen mehrfach gefalteten Bereich des Verbindungsmittels 30 gebildet ist, der im Ausgangszustand des Brandschutzbandes 22 zwischen den Lagen 24a, 24b angeordnet ist. Dieser Expansionsbereich ermöglicht ein gewisses Auseinanderbewegen der zweiten Längsränder 28a, 28b, sodass sich diese bei einem Aufschäumen der Lagen 24a, 24b zusätzlich auseinanderbewegen können.

Eine weitere Ausführungsform ist in Figur 4 gezeigt. In dieser Ausführungsform ist das Verbindungsmittel ziehharmonikaartig in die Lagen eingebettet, sodass sich eine andere Entfaltungsgeometrie ergibt. Insbesondere können sich bei dieser Ausführungsform nicht nur die ersten Längsränder 26a, 26b voneinander entfernen, sondern auch die zweiten Längsränder 28a, 28b.

Prinzipiell ist es denkbar, dass sich die Lagen 24a, 24b auf beliebige Weise voneinander entfernen, falls diese beginnen, sich aufzuschäumen. Insbesondere kann die gegenseitige Bewegung der Lagen 24a, 24b an den jeweiligen Anwendungsbereich oder die Größe des zu schließenden Durchbruchs angepasst werden.

## Patentansprüche

1. Mehrlagiges Brandschutzband (22) zum Einlegen in Durchbrüche (12) in Wänden oder Decken (10) von Gebäuden, mit zumindest zwei Lagen (24a, 24b) aus einem intumeszierenden Material, wobei die Lagen (24a, 24b) jeweils an einer Außenseite einen ersten Längsrand (26a, 26b) und an einer entgegengesetzten Außenseite einen zweiten Längsrand (28a, 28b) haben, wobei die Lagen (24a, 24b) flexibel miteinander verbunden sind, wobei ein Faden oder eine Klammer vorgesehen ist, der bzw. die die Lagen (24a, 24b) form- und/oder stoffschlüssig miteinander verbindet, um eine Verbindung zwischen den beiden Lagen (24a, 24b) zu schaffen, **dadurch gekennzeichnet, dass** die Verbindung bei einer Temperatur unterhalb der Intumeszenztemperatur der beiden Lagen (24a, 24b) gelöst werden kann, wobei der Faden bzw. die Klammer aus einem Kunststoff besteht, dessen Erweichungs-, Schmelz- oder Zersetzungstemperatur unterhalb der Intumeszenztemperatur der beiden Lagen (24a, 24b) liegt.

2. Mehrlagiges Brandschutzband (22) zum Einlegen in Durchbrüche (12) in Wänden oder Decken (10) von Gebäuden, mit zumindest zwei Lagen (24a, 24b) aus einem intumeszierenden Material, wobei die Lagen (24a, 24b) jeweils an einer Außenseite einen ersten Längsrand (26a, 26b) und an einer entgegengesetzten Außenseite einen zweiten Längsrand (28a, 28b) haben, wobei die Lagen (24a, 24b) flexibel miteinander verbunden sind, **dadurch gekennzeichnet, dass** zwischen den beiden Lagen (24a, 24b) eine Verbindungsschicht (32) vorgesehen ist, die die Lagen (24a, 24b) form- und/oder stoffschlüssig miteinander verbindet, wobei die Verbindungsschicht (32) bei einer Temperatur unterhalb der Intumeszenztemperatur der beiden Lagen (24a, 24b) gelöst werden kann.

3. Brandschutzband nach Anspruch 2, **dadurch gekennzeichnet, dass** die Verbindungsschicht (32) ein beidseitig klebendes Klebeband ist.

4. Brandschutzband nach einem der vorhergehenden Ansprüche, **dadurch gekennzeichnet, dass** die Lagen derart miteinander verbunden sind, dass diese durch ein Aktivieren des intumeszierenden Materials an einem Längsrand (26a, 26b, 28a, 28b) durch das intumeszierende Material auseinandergedrückt werden und anschließend auseinanderklaffen können.

5. Brandschutzband nach einem der vorhergehenden Ansprüche, **dadurch gekennzeichnet, dass** ein flexibles Verbindungsmittel (30) vorgesehen ist, das die Lagen (24a, 24b) flexibel verbindet, wobei das Verbindungsmittel (30) insbesondere jeweils nur an den ersten Längsrändern (26a, 26b) oder nur an den zweiten Längsrändern (28a, 28b) der Lagen (24a, 24b) mit diesen verbunden ist.

6. Brandschutzband nach Anspruch 5, **dadurch gekennzeichnet, dass** das Verbindungsmittel (30) ein Gewebe, insbesondere ein Glasfasergewebe, aufweist.

7. Brandschutzband nach einem der Ansprüche 5 und 6, **dadurch gekennzeichnet, dass** das Verbindungsmittel (30) zwischen den Lagen (24a, 24b) einen flexiblen Expansionsbereich (34) aufweist.

8. Brandschutzband nach Anspruch 7, **dadurch gekennzeichnet, dass** der Expansionsbereich (34) zumindest einmal, insbesondere mehrfach gefaltet ist.

9. Brandschutzband nach einem der Ansprüche 5 bis 8, **dadurch gekennzeichnet, dass** die Lagen (24a, 24b) flächig mit dem Verbindungsmittel (30) verbunden sind, insbesondere auf dieses aufgeklebt sind.

10. Brandschutzband nach Anspruch 9, **dadurch gekennzeichnet, dass** das Verbindungsmittel (30) auf den voneinander abgewandten Flächen der beiden Lagen (24a, 24b) mit diesen verbunden ist.

11. Brandschutzband nach einem der Ansprüche 5 bis 10, **dadurch gekennzeichnet, dass** sich das Verbindungsmittel zumindest teilweise in die Lagen (24a, 24b) erstreckt.

12. Brandschutzband nach einem der vorhergehenden Ansprüche, **dadurch gekennzeichnet, dass** zumindest eine Lage (24a, 24b) von einem Längsrand (26a, 26b, 28a, 28b) weg verlaufende Rippen und/oder Kanäle aufweist.

## Claims

1. Multilayer fire protection tape (22) for inserting into openings (12) in walls or ceilings (10) of buildings, with at least two layers (24a, 24b) made of an intumescing material, in which the layers (24a, 24b) each have a first longitudinal edge (26a, 26b) on an exterior and a second longitudinal edge (28a, 28b) on an opposite exterior, in which the layers (24a, 24b) are connected flexibly to each other, in which a thread or a clip is provided, which connect(s) the layers (24a, 24b) to each other with positive locking and/or bonding, in order to create a connection between both layers (24a, 24b), **characterised in that** the connection may be loosened at a temperature below the intumescence temperature of both layers (24a, 24b), in which the thread or clip consists of a plastic, the softening, melting or decomposition temperature of which is below the intumescence temperature of both layers (24a, 24b).

2. Multilayer fire protection tape (22) for inserting into openings (12) in walls or ceilings (10) of buildings, with at least two layers (24a, 24b) made of an intumescing material, in which the layers (24a, 24b) each have a first longitudinal edge (26a, 26b) on an exterior and a second longitudinal edge (28a, 28b) on an opposite exterior, in which the layers (24a, 24b) are connected flexibly to each other, **characterised in that** a connecting layer (32) is provided between both layers (24a, 24b), **which connects the layers** (24a, 24b) to each other with positive locking **and/or bonding,** in which the connecting layer (32) can be loosened at a temperature below the intumescence temperature of both layers (24a, 24b).

3. Fire protection tape according to claim 2, **characterised in that** the connecting layer (32) is an adhesive tape that is adhesive on both sides.

4. Fire protection tape according to one of the previous claims, **characterised in that** the layers are connected to each other in such a way that by the intumescing material being activated on a longitudinal edge (26a, 26b, 28a, 28b) they are pushed apart by the intumescing material and are then able to diverge.

5. Fire protection tape according to one of the previous claims, **characterised in that** a flexible means of connection (30) is provided, which connects the layers (24a, 24b) flexibly, in which the means of connection (30) in particular is connected to the layers (24a, 24b) only at their first longitudinal edges (26a, 26b) or only at their second longitudinal edges (28a, 28b).

6. Fire protection tape according to claim 5, **characterised in that** the means of connection (30) has a fabric, particularly a glass fibre fabric.

7. Fire protection tape according to one of claims 5 and 6, **characterised in that** the means of connection (30) has a flexible expansion area (34) between the layers (24a, 24b).

8. Fire protection tape according to claim 7, **characterised in that** the expansion area (34) is folded at least once, particularly several times.

9. Fire protection tape according to one of claims 5 to 8, **characterised in that** the layers (24a, 24b) are connected extensively to the means of connection (30), particularly stuck onto it.

10. Fire protection tape according to claim 9, **characterised in that** the means of connection (30) is connected to both layers (24a, 24b) on their surfaces facing away from each other.

11. Fire protection tape according to one of claims 5 to 10, **characterised in that** the means of connection extends at least partly into the layers (24a, 24b).

12. Fire protection tape according to one of the previous claims, **characterised in that** at least one layer (24a, 24b) has ridges and/or channels running away from a longitudinal edge (26a, 26b, 28a, 28b).

## Revendications

1. Bande pare-feu à plusieurs couches (22) à placer dans des ouvertures de traversée (12) dans des murs ou des plafonds (10) de bâtiments, comportant au moins deux couches (24a, 24b) constituées d'un matériau intumescent, dans laquelle les couches (24a, 24b) ont respectivement un premier bord longitudinal (26a, 26b) sur un côté extérieur et un second bord longitudinal (28a, 28b) sur un côté extérieur opposé, dans laquelle les couches (24a, 24b) sont assemblées l'une à l'autre de manière souple, dans laquelle est prévu un fil ou une agrafe qui assemble les couches (24a, 24b) l'une à l'autre par complémentarité de formes et/ou par liaison de matière, afin de créer une liaison entre les deux couches (24a, 24b), **caractérisée en ce que** la liaison peut être supprimée à une température inférieure à la température d'intumescence des deux couches (24a, 24b), dans laquelle le fil ou l'agrafe est constitué d'une matière plastique dont la température de ramollissement, de fusion ou de décomposition est inférieure à la température d'intumescence des deux couches (24a, 24b).

2. Bande pare-feu à plusieurs couches (22) à placer dans des ouvertures de traversée (12) dans des murs ou des plafonds (10) de bâtiments, comportant au moins deux couches (24a, 24b) constituées d'un matériau intumescent, dans laquelle les couches (24a, 24b) ont respectivement un première bord longitudinal (26a, 26b) sur un côté extérieur et un second bord longitudinal (28a, 28b) sur un côté extérieur opposé, dans laquelle les couches (24a, 24b) sont assemblées l'une à l'autre de manière souple, **caractérisée en ce qu'**entre les deux couches (24a, 24b) est prévue une couche de liaison (32) qui assemble les couches (24a, 24b) l'une à l'autre par complémentarité de formes et/ou par liaison de matière, dans laquelle la couche de liaison (32) peut être supprimée à une température inférieure à la température d'intumescence des deux couches (24a, 24b).

3. Bande pare-feu selon la revendication 2, **caractérisée en ce que** la couche de liaison (32) est une bande adhésive à double face.

4. Bande pare-feu selon l'une des revendications précédentes, **caractérisée en ce que** les couches sont assemblées l'une à l'autre de telle sorte que celles-ci sont poussées en s'éloignant l'une de l'autre à travers le matériau intumescent par une activation du matériau intumescent sur un bord longitudinal (26a, 26, 28a, 28b) et peuvent ensuite s'écarter l'une de l'autre.

5. Bande pare-feu selon l'une des revendications précédentes, **caractérisée en ce que** sont prévus des moyens de liaison souples (30) qui relient les couches (24a, 24b) de manière souple, dans laquelle les moyens de liaison (30) sont en particulier respectivement reliés à celles-ci uniquement au niveau des premiers bords longitudinaux (26a, 26b) ou uniquement au niveau des seconds bords longitudinaux (28a, 28b) des couches (24a, 24b).

6. Bande pare-feu selon la revendication 5, **caractérisée en ce que** les moyens de liaison (30) comportent une étoffe tissée, en particulier un tissu de fibres de verre.

7. Bande pare-feu selon l'une des revendications 5 et 6, **caractérisée en ce que** les moyens de liaison (30) comportent une zone d'expansion souple (34) entre les couches (24a, 24b).

8. Bande pare-feu selon la revendication 7, **caractérisée en ce que** la zone d'expansion (34) est pliée au moins une fois, en particulier plusieurs fois.

9. Bande pare-feu selon l'une des revendications 5 à 8, **caractérisée en ce que** les couches (24a, 24b) sont assemblées à plat aux moyens de liaison (30) et sont en particulier collés sur ceux-ci.

10. Bande pare-feu selon la revendication 9, **caractérisée en ce que** les moyens de liaison (30) situés sur les surfaces opposées l'une à l'autre des deux couches (24a, 24b) sont reliés à celles-ci.

11. Bande pare-feu selon l'une des revendications 5 à 10, **caractérisée en ce que** les moyens de liaison s'étendent au moins en partie dans les couches (24a, 24b) .

12. Bande pare-feu selon l'une des revendications précédentes, **caractérisée en ce qu'**au moins une couche (24a, 24b) comporte des nervures et/ou des canaux s'éloignant d'un bord longitudinal (26a, 26b, 28a, 28b).
